# EUROPEAN PATENT APPLICATION

(11) **EP 2 903 338 A1**
(43) Date of publication of application: **05.08.2015**
(21) Application number: 13841924.7
(22) Date of filing: 24.09.2013
(51) Int. Cl.: H04W 36/02, H04W 16/32, H04W 36/04

(54) **MOBILE COMMUNICATION METHOD**

(30) Priority: 25.09.2012 JP 2012211018
(71) Applicant: NTT DOCOMO, Inc., Chiyoda-ku Tokyo 100-6150 (JP)
(72) Inventor: HAPSARI, Wuri Andarmawanti, Tokyo 100-6150 (JP); MORIOKA, Yasufumi, Tokyo 100-6150 (JP); UCHINO, Tooru, Tokyo 100-6150 (JP); TAKAHASHI, Hideaki, Tokyo 100-6150 (JP)
(74) Representative: Hoffmann Eitle
(86) International application number: PCT/JP2013/075680
(87) International publication number: WO 2014/050805

(57) **Abstract**

In adding or deleting a radio base station PhNB managing a small cell, a transmission path of a mobile station UE is changed, while impact on a radio base station eNB and the radio base station PhNB is minimized. A mobile communication method according to the present invention includes the steps of: in a case where the mobile station UE is in communication in a macro cell and the radio base station PhNB is selected as a transmission path of user data of the mobile station UE, causing the radio base station eNB to start addition processing of adding the radio base station PhNB to the transmission path of the user data of the mobile station UE; causing the radio base station PhNB to reset header-compression related information, security setting information, and sequence-number management information in the addition processing; and causing the radio base station eNB to forward downlink user data destined for the mobile station UE, without forwarding uplink user data of the mobile station UE, to the radio base station PhNB in the addition processing.

## Description

### TECHNICAL FIELD

The present invention relates to a mobile communication method.

### BACKGROUND ART

In LTE (Long Term Evolution), introduction of a small cell (or a phantom cell) has been studied to realize high-speed large-capacity communication that takes advantage of effective utilization of high frequencies (3.5 GHz or more) with poor propagation properties and broadband performance.

### PRIOR ART DOCUMENT

### NON-PATENT DOCUMENT

Non-patent document 1: 3GPP TS36.300

### SUMMARY OF THE INVENTION

A radio base station PhNB managing the above-mentioned small cell is functionally limited for a reason such as having no RRC (Radio Resource Control) layer function, as compared with a radio base station eNB managing a macro cell.

Considering this point, it has been studied to introduce a way in which a mobile station UE even in communication in a small cell transmits user data (U-plane data) of the mobile station UE via a radio base station eNB.

However, existing LTE has a problem that it is not studied how to add a radio base station PhNB to a transmission path of a mobile station UE when the mobile station UE is in communication in a macro cell.

Similarly, existing LTE has a problem that it is not studied how to delete a radio base station PhNB managing a small cell from a transmission path of a mobile station UE when the mobile station UE is in communication in this small cell.

The present invention is made in view of the above-described problems. It is an objective of the present invention to provide a mobile communication method capable of changing a transmission path of a mobile station UE, while minimizing impact on a radio base station eNB and a radio base station PhNB, when adding or deleting the radio base station PhNB managing a small cell.

A first feature of the present invention is summarized as a mobile communication method including the steps of: in a case where a mobile station is in communication in a macro cell managed by a first radio base station, and in a case where a second radio base station, which manages a small cell having a coverage including a location where the mobile station is present, is selected as a transmission path of user data of the mobile station, causing the first radio base station to start addition processing of adding the second radio base station to the transmission path of the user data of the mobile station; causing the second radio base station to reset header-compression related information, security setting information, and sequence-number management information in the addition processing; and causing the first radio base station to forward downlink user data destined for the mobile station, without forwarding uplink user data of the mobile station, to the second radio base station, in the addition processing.

A second feature of the present invention is summarized as mobile communication method including the steps of: in a case where a transmission path of user data of a mobile station includes a first radio base station managing a macro cell and a second radio base station managing a small cell having a coverage including a location where the mobile station is present, and in a case where, when the mobile station is in communication in the small cell, use of the second radio base station as the transmission path of the user data of the mobile station is stopped, causing the first radio base station to start deletion processing of deleting the second radio base station from the transmission path of the user data of the mobile station; causing the first radio base station to reset header-compression related information, security setting information, and sequence-number management information, in the deletion processing; and causing the second radio base station to forward downlink user data destined for the mobile station, without forwarding uplink user data of the mobile station, to the first radio base station in the deletion processing.

### BRIEF DESCRIPTION OF THE DRAWINGS

[Fig. 1] Fig. 1 is an overall configuration view of a mobile communication system according to a first embodiment of the present invention.
[Fig. 2] Fig. 2 is a functional block diagram of a radio base station eNB according to the first embodiment of the present invention.
[Fig. 3] Fig. 3 is a sequence diagram illustrating operation of the mobile communication system according to the first embodiment of the present invention.
[Fig. 4] Fig. 4 is a sequence diagram illustrating operation of the mobile communication system according to the first embodiment of the present invention.

### MODE FOR CARRYING OUT THE INVENTION

### (Mobile Communication System according to First Embodiment of Present Invention)

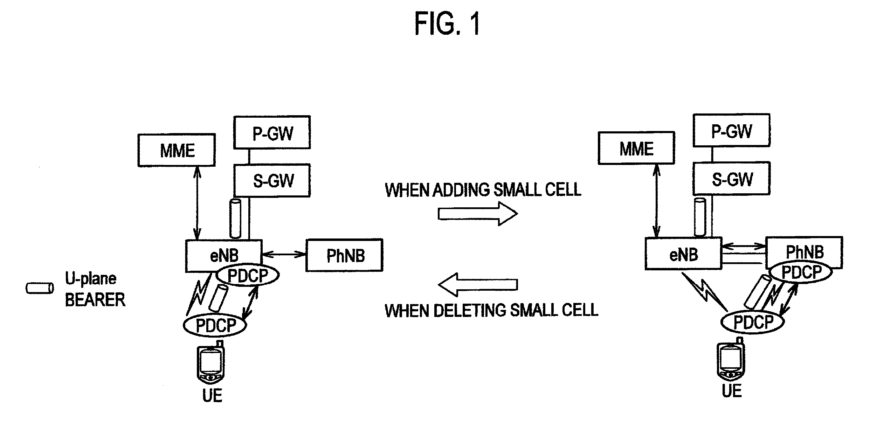

A mobile communication system according to a first embodiment of the present invention will be described with reference to Fig. 1 to Fig. 4.

The mobile communication system according to the present embodiment employs an LTE scheme, and includes a gateway device P-GW (PDN Gatewey)/S-GW (Serving Gateway), a mobility management node MME (Mobility Management Entity), a radio base station PhNB managing a small cell, and a radio base station eNB managing a macro cell, as illustrated in Fig. 1.

Here, a coverage area of the macro cell and a coverage area of the small cell are arranged to overlap each other at least partially.

In a case where a mobile station UE is in communication in the macro cell managed by the radio base station eNB, and in a case where the radio base station PhNB, which manages the small cell having a coverage including a location where the mobile station UE is present, is selected as a transmission path of user data of the mobile station UE, the user data of the mobile station UE is then transmitted via a U-plane bearer established between the gateway device S-GW and the radio base station eNB, a U-plane bearer established between the radio base station eNB and the radio base station PhNB, and a U-plane bearer established between the radio base station PhNB and the mobile station UE, as illustrated in Fig. 1.

In other words, in this case, the transmission path of the user data of the mobile station UE changes from a path of the gateway device S-GW ↔. the radio base station eNB ↔ the mobile station UE to a path of the gateway device S-GW ↔ the radio base station eNB ↔ the radio base station PhNB ↔ the mobile station UE.

For example, the radio base station PhNB is selected as the transmission path of the user data of the mobile station UE, when a coverage area of the radio base station eNB includes a coverage area of the radio base station PhNB, and the coverage area of the radio base station PhNB includes the location where the mobile station UE is present.

On the other hand, while the mobile station UE is in communication in the small cell managed by the radio base station PhNB, if the radio base station PhNB is stopped being used as the transmission path of the user data of the mobile station UE, the user data of the mobile station UE is transmitted via the U-plane bearer established between the gateway device S-GW and the radio base station eNB, and the U-plane bearer established between the radio base station eNB and the mobile station UE, as illustrated in Fig. 1.

In other words, in this case, the transmission path of the user data of the mobile station UE changes from the path of the gateway device S-GW ↔ the radio base station eNB↔ the radio base station PhNB ↔ the mobile station UE to the path of the gateway device S-GW ↔ the radio base station eNB ↔ the mobile station UE.

For example, the radio base station PhNB is stopped being used as the transmission path of the user data of the mobile station UE, when the mobile station UE leaves the coverage area of the radio base station PhNB.

In such a configuration, the radio base station PhNB is not required to establish a logical path for the gateway device S-GW, and only needs to ensure connection with the radio base station eNB. Therefore, it is possible to reduce processing load of the radio base station PhNB.

Further, the gateway device S-GW is not required to have a function of identifying the small cell, which can minimize impact on an existing architecture.

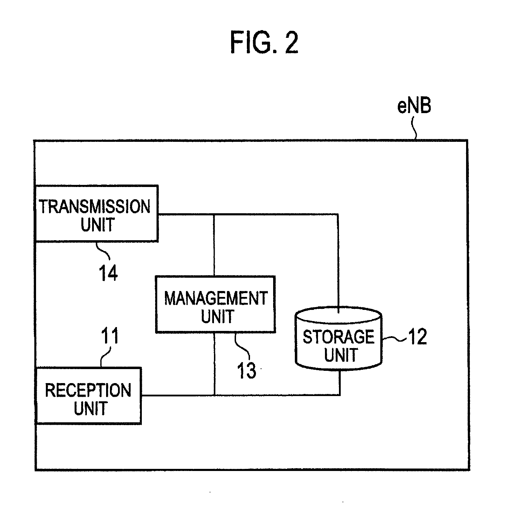

The radio base station eNB includes a reception unit 11, a storage unit 12, a management unit 13 , and a transmission unit 14, as illustrated in Fig. 2.

The reception unit 11 is configured to receive various signals from the gateway device S-GW, the mobility management node MME, the radio base station PhNB, the mobile station UE, and the like.

For example, the reception unit 11 is configured to receive downlink user data destined for the mobile station UE from the gateway device S-GW, receive uplink user data of the mobile station from the radio base station PhNB or the mobile station UE, and receive "E-RAB setup response" from the radio base station PhNB.

The storage unit 12 is configured to buffer the downlink user data destined for the mobile station UE and the uplink user data of the mobile station received by the reception unit 11, in a GTP (GPRS Tunnelling Protocol) layer or a PDCP (Packet Data Convergence Protocol) layer.

The management unit 13 is configured to manage U-plane bearer related information, security setting information, PDCP-layer related information (PDCP Config), forward mode and transmission state related information (RoHC context), sequence-number management information, and the like.

Here, the U-plane bearer related information includes "E-RAB ID" and "QoS information (E-RAB Level QoS Parameters) ", and the like.

Further, the security setting information includes Security capability of UE (UE Security Capability) , information about Security of AS (AS Security Information), and the like.

Furthermore, the PDCP-layer related information includes a sequence-number maximum length, header-compression related information, necessity of "PDCP Status Report", and the like.

Moreover, the header-compression related information includes "MAX_ID", "PROFILES", and the like.

Here, "MAX_ID" is a maximum value of a context ID provided to identify a flow, and "PROFILES" is information indicating which header is to be compressed.

The transmission unit 14 is configured to transmit various signals to the gateway device S-GW, the mobility management node MME, the radio base station PhNB, the mobile station UE, and the like.

For example, the transmission unit 14 is configured to transmit the uplink user data of the mobile station UE to the gateway device S-GW, transmit the downlink user data destined for the mobile station to the radio base station PhNB and the mobile station UE, transmit "RRC Connection Reconfiguration" to the mobile station UE, and transmit "E-RAB setup request" to the radio base station PhNB.

Here, in the case where the mobile station UE is in communication in the macro cell managed by the radio base station eNB, and in the case where the radio base station PhNB, which manages the small cell having the coverage including the location where the mobile station UE is present, is selected as the transmission path of the user data of the mobile station UE, the transmission unit 14 is configured to transmit "E-RAB setup request" to the radio base station PhNB, thereby starting addition processing of adding the radio base station PhNB to the transmission path of the user data of the mobile station UE.

Further, in the case where the transmission path of the user data of the mobile station UE includes the radio base station eNB and the radio base station PhNB and the mobile station UE is in communication in the small cell, and in the case where use of the radio base station PhNB as the transmission path of the user data of the mobile station UE is stopped, the transmission unit 14 is configured to transmit "E-RAB release request" to the radio base station PhNB, thereby starting deletion processing of deleting the radio base station PhNB from the transmission path of the user data of the mobile station UE.

Moreover, in the above-described addition processing, the transmission unit 14 may be configured to forward the downlink user data destined for the mobile station UE, without forwarding the uplink user data of the mobile station UE, to the radio base station PhNB.

Here, the transmission unit 14 may be configured to forward the downlink user data, destined for the mobile station and buffered in the PDCP layer, to the radio base station PhNB by starting from downlink user data which is already transmitted to the mobile station UE but for which transmission confirmation information (ACK) is not yet received from the mobile station UE.

Further, the transmission unit 14 may be configured to forward the downlink user data, destined for the mobile station UE and buffered in the PDCP layer, to the radio base station PhNB by starting from downlink user data that is not yet transmitted to the mobile station UE.

Furthermore, the radio base station eNB may be configured to forward downlink user data destined for the mobile station UE, which is already transmitted from the gateway device S-GW via an S1-U Interface but is not yet buffered in the PDCP layer, to the radio base station PhNB.

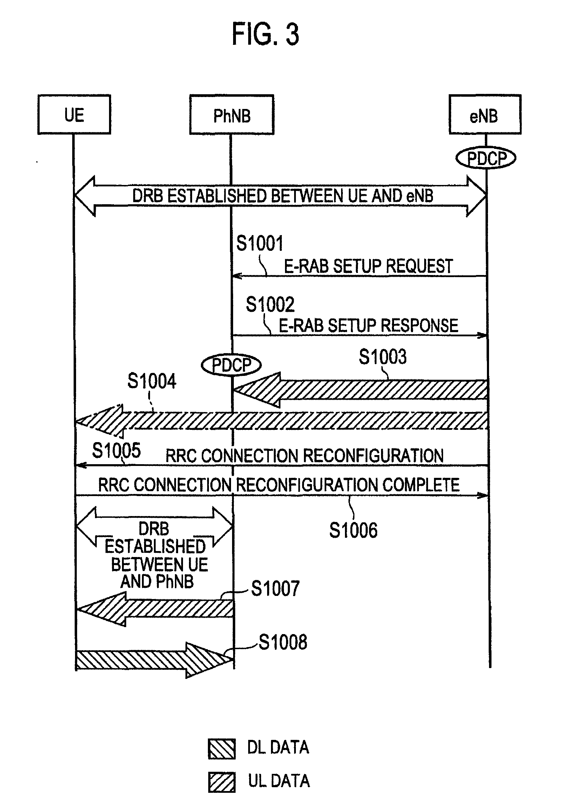

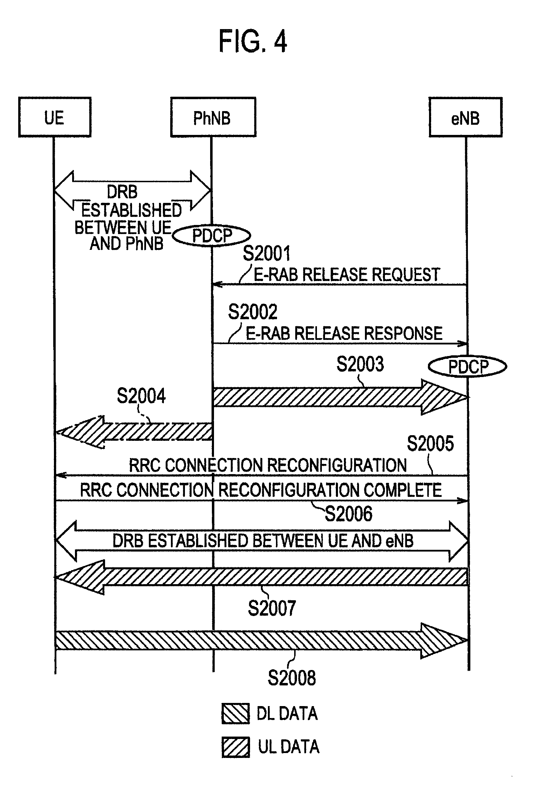

Operation of the mobile communication system according to the present embodiment will be described below with reference to Fig. 3 and Fig. 4.

First, operation of the mobile communication system according to the present embodiment in the following case will be described with reference to Fig. 4. This is the case where the mobile station UE is in communication in the macro cell managed by the radio base station eNB, and where the radio base station PhNB, which manages the small cell having the coverage including the location where the mobile station UE is present, is selected as the transmission path of the user data of the mobile station UE.

As illustrated in Fig. 3, a DRB (Data Radio Bearer) is established between the radio base station eNB and the mobile station UE. In this state, when detecting selection of the radio base station PhNB as the transmission path of the user data of the mobile station UE, the radio base station eNB stops the transmission of the downlink user data destined for the mobile station UE, to the mobile station UE. In step S1001, the radio base station eNB transmits "E-RAB setup request" for requesting generation of the U-plane bearer between the radio base station eNB and the radio base station PhNB, to the radio base station PhNB.

Here, the radio base station eNB notifies the radio base station PhNB of the U-plane bearer related information, by using this "E-RAB setup request".

In response to this "E-RAB setup request", the radio base station PhNB generates the U-plane bearer between the radio base station eNB and the radio base station PhNB. At the same time, the radio base station PhNB resets the security setting information, the PDCP-layer related information (PDCP Config), the forward mode and transmission state related information (RoHC context), the sequence-number management information, and the like. In step S1002, the radio base station PhNB transmits "E-RAB setup response" to the radio base station eNB.

In step S1003, the radio base station eNB forwards the downlink user data destined for the mobile station UE that is buffered in the PDCP layer, to the radio base station PhNB.

Here, the radio base station eNB does not forward the uplink user data of the mobile station UE that is buffered in the PDCP layer, to the radio base station PhNB.

The radio base station eNB is assumed to transmit the downlink user data destined for the mobile station UE to the mobile station UE (see step S1004), until transmission of "RRC Connection Reconfiguration" in step S1005 is completed, or until "RRC Connection Reconfiguration Complete" in step S1006 is received.

In step S1005, the radio base station eNB transmits "RRC Connection Reconfiguration" to the mobile station UE.

Upon receiving this "RRC Connection Reconfiguration", the mobile station UE stops the transmission of the uplink user data to the radio base station eNB.

In step S1006, the mobile station UE transmits "RRC Connection Reconfiguration Complete" to the radio base station eNB.

In response to this "RRC Connection Reconfiguration Complete", the radio base station eNB stops the management of the U-plane bearer related information, the security setting information, the PDCP-layer related information (PDCP Config), the forward mode and transmission state related information (RoHC context), and the like.

Here, a DRB is established between the radio base station PhNB and the mobile station UE. In step S1007, the radio base station PhNB reopens the transmission to the mobile station UE, starting from the downlink user data destined for the mobile station UE having "sequence number = 0". In step S1008, the mobile station UE sends the radio base station PhNB the uplink user data, which has a sequence number equal or subsequent to the sequence number of the uplink user data of which transmission to the radio base station eNB is completed.

Second, operation of the mobile communication system according to the present embodiment in the following case will be described with reference to Fig. 4. This is the case where, when the mobile station UE is in communication in the small cell managed by the radio base station PhNB, the radio base station PhNB is stopped being used as the transmission path of the user data of the mobile station UE.

As illustrated in Fig. 4, a DRB is established between the radio base station PhNB and the mobile station UE. In this state, when detecting the radio base station PhNB stopped being used as the transmission path of the user data of the mobile station UE, the radio base station eNB stops the transmission of the downlink user data destined for the mobile station UE to the radio base station PhNB. In step S2001, the radio base station eNB transmits "E-RAB release request" for requesting release of the U-plane bearer between the radio base station eNB and the radio base station PhNB, to the radio base station PhNB.

In response to this "E-RAB release request", the radio base station PhNB releases the U-plane bearer between the radio base station eNB and the radio base station PhNB. In step S2002, the radio base station PhNB notifies the radio base station eNB of the U-plane bearer related information, by using "E-RAB release response".

The radio base station eNB starts the management of the U-plane bearer related information and the like, and resets the security setting information, the PDCP-layer related information (PDCP Config), the forward mode and transmission state related information (RoHC context), the sequence-number management information, and the like.

In step S2003, the radio base station PhNB forwards the downlink user data destined for the mobile station UE that is buffered in the PDCP layer, to the radio base station eNB.

Here, the radio base station PhNB does not forward the uplink user data of the mobile station UE that is buffered in the PDCP layer, to the radio base station eNB.

The radio base station PhNB is assumed to transmit the downlink user data destined for the mobile station UE to the mobile station UE (see step S2004), until transmission of "RRC Connection Reconfiguration" in step S2005 is completed, or until transmission of "RRC Connection Reconfiguration Complete" in step S2006 is completed.

In step S2005, the radio base station eNB transmits "RRC Connection Reconfiguration" to the mobile station UE.

Upon receiving this "RRC Connection Reconfiguration", the mobile station UE stops the transmission of the uplink user data to the radio base station PhNB.

In step S2006, the mobile station UE transmits "RRC Connection Reconfiguration Complete" to the radio base station eNB.

In response to this "RRC Connection Reconfiguration Complete", the radio base station eNB stops the management of the U-plane bearer related information, the security setting information, the PDCP-layer related information (PDCP Config), the forward mode and transmission state related information (RoHC context), and the like.

Here, a DRB is established between the radio base station eNB and the mobile station UE. In step S2007, the radio base station eNB reopens the transmission to the mobile station UE, starting from the downlink user data destined for the mobile station UE having "sequence number = 0". In step S2008, the mobile station UE sends the radio base station eNB the uplink user data, which has a sequence number equal or subsequent to the sequence number of the uplink user data of which transmission to the radio base station PhNB is completed.

The features of the present embodiment may also be expressed as follows.

A first feature of the present embodiment is summarized as a mobile communication method including the steps of: in a case where a mobile station UE is in communication in a macro cell managed by a radio base station eNB (first radio base station), and in a case where a radio base station PhNB (second radio base station), which manages a small cell having a coverage including a location where the mobile station UE is present, is selected as a transmission path of user data of the mobile station UE, causing the radio base station eNB to start addition processing of adding the radio base station PhNB to the transmission path of the user data of the mobile station UE; causing the radio base station PhNB to reset header-compression related information, security setting information, and sequence-number management information, in the addition processing; and causing the radio base station eNB to forward downlink user data destined for the mobile station UE, without forwarding uplink user data of the mobile station UE, to the radio base station PhNB, in the addition processing.

According to this configuration, at the time of adding the radio base station PhNB, data loss may occur, but it is possible to change the transmission path of the user data while simplifying the processing in the radio base station PhNB and the radio base station eNB.

In the first feature of the present embodiment, the radio base station eNB may forward downlink user data destined for the mobile station and buffered in a PDCP layer to the radio base station PhNB by staring from downlink user data which is already transmitted to the mobile station UE but for which transmission confirmation information (ACK) is not yet received from the mobile station UE.

According to this configuration, possibility of occurrence of data loss can be reduced by performing retransmission in the radio base station eNB until setting of the radio base station PhNB is completed.

In the first feature of the present embodiment, the radio base station eNB may forward downlink user data destined for the mobile station UE and buffered in a PDCP layer to the radio base station PhNB by starting from downlink user data that is not yet transmitted to the mobile station UE.

According to this configuration, receipt of the downlink user data destined for the mobile station UE may be repeated in the mobile station UE, but it is possible to avoid loss of the downlink user data destined for the mobile station UE.

In the first feature of the present embodiment, the radio base station eNB may forward downlink user data destined for the mobile station UE and not yet buffered in a PDCP layer to the radio base station PhNB.

According to this configuration, loss of the downlink user data destined for the mobile station UE may occur. However, the downlink user data to be transmitted from the radio base station PhNB to the mobile station UE is new, because the PDCP layer is reset. Therefore, it is possible to prevent a mismatch between the mobile station UE and the radio base station PhNB in terms of downlink user data, even in an upper layer.

In the first feature of the present embodiment, the mobile station UE may send the radio base station PhNB uplink user data which has a sequence number equal or subsequent to a sequence number of uplink user data of which transmission to the radio base station eNB is completed.

Further, in the first feature of the present embodiment, the mobile station UE may reset the sequence number of the uplink user data to be transmitted to the radio base station PhNB, because the PDCP layer is reset.

According to this configuration, it is not necessary to exchange the management state of the sequence number of the uplink user data between the radio base station eNB and the radio base station PhNB, which allows simple processing.

A second feature of the present embodiment is summarized as a mobile communication method including the steps of: in a case where a transmission path of user data of a mobile station UE includes a radio base station eNB managing a macro cell and a radio base station PhNB managing a small cell having a coverage including a location where the mobile station UE is present, and in a case where, when the mobile station UE is in communication in the small cell, use of the radio base station PhNB as the transmission path of the user data of the mobile station UE is stopped, causing the radio base station eNB to start deletion processing of deleting the radio base station PhNB from the transmission path of the user data of the mobile station UE; causing the radio base station eNB to reset header-compression related information, security setting information, and sequence-number management information, in the deletion processing; and causing the radio base station PhNB to forward downlink user data destined for the mobile station UE, without forwarding uplink user data of the mobile station UE, to the radio base station eNB in the deletion processing.

According to this configuration, at the time of deleting the radio base station PhNB, data loss may occur, but it is possible to change the transmission path of the user data while simplifying the processing in the radio base station PhNB and the radio base station eNB.

In the second feature of the present embodiment, the radio base station PhNB may forward downlink user data destined for the mobile station UE and buffered in a PDCP layer to the radio base station eNB by starting from downlink user data which is already transmitted to the mobile station UE but for which transmission confirmation information (ACK) is not yet received from the mobile station UE.

According to this configuration, possibility of occurrence of data loss can be reduced by performing retransmission in the radio base station PhNB until setting of the radio base station eNB is completed.

In the second feature of the present embodiment, the radio base station PhNB may forward downlink user data destined for the mobile station UE and buffered in a PDCP layer to the radio base station eNB by starting from downlink user data that is not yet transmitted to the mobile station UE.

According to this configuration, receipt of the downlink user data destined for the mobile station UE may be repeated in the mobile station UE, but it is possible to avoid loss of the downlink user data destined for the mobile station UE.

In the second feature of the present embodiment, the radio base station PhNB may forward downlink user data destined for the mobile station UE and not yet buffered in a PDCP layer to the radio base station eNB.

According to this configuration, loss of the downlink user data destined for the mobile station UE may occur. However, the downlink user data to be transmitted from the radio base station eNB to the mobile station UE is new, because the PDCP layer is reset. Therefore, it is possible to prevent a mismatch between the mobile station UE and the radio base station eNB in terms of downlink user data, even in an upper layer.

In the second feature of the present embodiment, the mobile station UE may send the radio base station eNB uplink user data which has a sequence number equal or subsequent to a sequence number of uplink user data of which transmission to the radio base station PhNB is completed.

Further, in the second feature of the present embodiment, the mobile station UE may reset the sequence number of the uplink user data to be transmitted to the radio base station eNB, because the PDCP layer is reset.

According to this configuration, it is not necessary to exchange the management state of the sequence number of the uplink user data between the radio base station eNB and the radio base station PhNB, which allows simple processing.

It should be noted that the foregoing operations of the mobile stations UE, the radio base stations eNB/PhNB, the mobility management node MME, and the gateway device S-GW may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile stations UE, the radio base stations eNB/PhNB, the mobility management node MME, and the gateway device S-GW. Otherwise, the storage medium and the processor may be provided as discrete components inside the mobile stations UE, the radio base stations eNB/PhNB, the mobility management node MME, and the gateway device S-GW.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

Note that the entire content of Japanese Patent Application No. 2012-211018 (filed on September 25, 2012) is incorporated by reference in the present specification.

### INDUSTRIAL APPLICABILITY

As described above, according to the present invention, it is possible to provide a mobile communication method capable of changing the transmission path of the mobile station UE, while minimizing impact on the radio base station eNB and the radio base station PhNB, when adding or deleting the radio base station PhNB managing the small cell.

### EXPLANATION OF THE REFERENCE NUMERALS

- S-GW: gateway device
- MME: mobility management node
- eNB/PhNB: radio base station
- UE: mobile station
- 11: reception unit
- 12: storage unit
- 13: management unit
- 14: transmission unit

## Claims

1. A mobile communication method comprising the steps of:
in a case where a mobile station is in communication in a macro cell managed by a first radio base station, and in a case where a second radio base station, which manages a small cell having a coverage including a location where the mobile station is present, is selected as a transmission path of user data of the mobile station, causing the first radio base station to start addition processing of adding the second radio base station to the transmission path of the user data of the mobile station;
causing the second radio base station to reset header-compression related information, security setting information, and sequence-number management information in the addition processing; and
causing the first radio base station to forward downlink user data destined for the mobile station, without forwarding uplink user data of the mobile station, to the second radio base station, in the addition processing.

2. The mobile communication method according to claim 1, wherein the first radio base station forwards downlink user data, which is destined for the mobile station and buffered in a PDCP layer, to the second radio base station by staring from downlink user data which is already transmitted to the mobile station but for which transmission confirmation information is not yet received from the mobile station.

3. The mobile communication method according to claim 1, wherein the first radio base station forwards downlink user data, which is destined for the mobile station and buffered in a PDCP layer, to the second radio base station by starting from downlink user data that is not yet transmitted to the mobile station.

4. The mobile communication method according to claim 1, wherein the first radio base station forwards downlink user data, which is destined for the mobile station and not yet buffered in a PDCP layer, to the second radio base station.

5. The mobile communication method according to any one of claims 1 to 4, wherein the mobile station sends the second radio base station uplink user data which has a sequence number equal or subsequent to a sequence number of uplink user data of which transmission to the first radio base station is completed.

6. A mobile communication method comprising the steps of:
in a case where a transmission path of user data of a mobile station includes a first radio base station managing a macro cell and a second radio base station managing a small cell having a coverage including a location where the mobile station is present, and in a case where, when the mobile station is in communication in the small cell, use of the second radio base station as the transmission path of the user data of the mobile station is stopped, causing the first radio base station to start deletion processing of deleting the second radio base station from the transmission path of the user data of the mobile station;
causing the first radio base station to reset header-compression related information, security setting information, and sequence-number management information, in the deletion processing; and
causing the second radio base station to forward downlink user data destined for the mobile station, without forwarding uplink user data of the mobile station, to the first radio base station in the deletion processing.

7. The mobile communication method according to claim 6, wherein the second radio base station forwards downlink user data, which is destined for the mobile station and buffered in a PDCP layer, to the first radio base station by starting from downlink user data which is already transmitted to the mobile station but for which transmission confirmation information is not yet received from the mobile station.

8. The mobile communication method according to claim 6, wherein the second radio base station forwards downlink user data, which is destined for the mobile station and buffered in a PDCP layer, to the first radio base station by starting from downlink user data which is not yet transmitted to the mobile station.

9. The mobile communication method according to claim 6, wherein the second radio base station forwards downlink user data, which is destined for the mobile station and not yet buffered in a PDCP layer, to the first radio base station.

10. The mobile communication method according to any one of claims 6 to 9, wherein the mobile station sends the first radio base station uplink user data which has a sequence number equal or subsequent to a sequence number of uplink user data of which transmission to the second radio base station is completed.
